# EUROPEAN PATENT SPECIFICATION

(11) **EP 2 810 978 B1**
(45) Date of publication and mention of the grant of the patent: **27.12.2017**
(21) Application number: 13171069.1
(22) Date of filing: 07.06.2013
(51) Int. Cl.: C08J 5/00

(54) **Removal of a low viscosity carrier from a filler-thermoplastic polymer composite**
Beseitigung eines Trägers mit niedriger Viskosität von einem thermoplastischen Füllerpolymerverbundstoff
Retrait d'un support de faible viscosité à partir d'un composite polymère avec un matériau thermoplastique

(43) Date of publication of application: 10.12.2014
(73) Proprietor: Future Carbon GmbH, 95448 Bayreuth (DE)
(72) Inventor: Hocke, Heiko, 51375 Leverkusen (DE); VITOVSKY John, Seabrook, TX 77586-000 (US); KÖNIG Thomas, 51375 Leverkusen (DE)
(74) Representative: Müller, Christian Stefan Gerd

(56) References cited:
- EP-B1- 2 501 746
- WO-A1-2012/031989
- MICHAEL THOMAS MLLER ET AL: "Influence of feeding conditions in twin-screw extrusion of PP/MWCNT composites on electrical and mechanical properties", COMPOSITES SCIENCE AND TECHNOLOGY, ELSEVIER, UK, vol. 71, no. 13, 10 June 2011 (2011-06-10) , pages 1535-1542, XP028272911, ISSN: 0266-3538, DOI: 10.1016/J.COMPSCITECH.2011.06.003 [retrieved on 2011-06-29]

## Description

### TECHNICAL FIELD OF THE INVENTION

The present disclosure relates to a process for the preparation of a composite material comprising a filler and a thermoplastic polymer or reactive resin in an extrusion system and the use of an extruder for compounding such a composite material in the presence of a low viscosity carrier.

### BACKGROUND OF THE INVENTION

Extrusion is a well-known process for the manufacture of polymer composites. During extrusion, a polymer and/or resin and optionally other starting materials are conveyed through an extruder. In the extruder, the polymer components are melted, subjected to mechanical shear forces and mixing, optionally reacted and finally pressed through a die, resulting in an elongated product with a predetermined cross section. Additives, such as plasticizers, fillers or stabilizers may be added to the polymer to provide the extruded product with specific properties.

The individual particles of certain fillers often tend to adhere to one another and form small agglomerates. This formation of agglomerates hinders a homogenous distribution of the filler in the polymer composite product.

Carbon nanotubes (CNTs) are examples of fillers with exceptional properties. For example, the strength is approximately 100 times that of steel, the thermal conductivity is comparable to that of diamond, their thermal stability reaches up to 2800 °C under reduced pressure and the electrical conductivity can be a multiple of the conductivity of copper. These principle molecular and structural characteristics, however, are often only fully exploitable in a composite material comprising CNTs if it is possible to finely disperse the CNTs in the matrix. A dispersion, the finer the better, ensures abundant contact between the CNTs and the medium, leading to best possible exploitation of the CNTs exceptional molecular and structural characteristics in the composite material. In order to obtain fine and stable dispersions, the CNTs must be compatible with the polymer material or have to be compatibilized by way of additives or modification of the CNTs.

In terms of electrical conductivity, it is also advantageous to form a highly connected network CNTs in the composite material. The formation of such a network is reflected by the sharp increase in the electrical conductivity as a function of the concentration of carbon nanotubes (percolation). For the formation of a network, the CNTs should be individualized, i.e. dispersed, as much as possible, essentially free of agglomerates, not aligned and present at around the minimal concentration at which such a network can form.

This emerged, for example, from studies with reactive resins, in particular epoxies, where larger CNT agglomerates led to breaking points and deteriorated mechanical properties of such composite materials (cf. Zhou, Express Polym. Lett. 2008, 2, 1, 40-48). For industrial applications, therefore, the incorporation of CNTs into a polymer matrix is still challenging. The observed difficulties in dispersing CNTs in polymer matrices are possibly due to the hydrophobic character of the carbon nanotube surface, mechanical interlocking of the fibers in agglomerates or later by diffusion processes and the high aspect ratio of the quasi one-dimensional structure. In order to obtain a product with the desired mechanical and conductive properties, CNT agglomerates have to be broken up and - often - the tendency of carbon nanotubes to reaggregate has to be suppressed.

US 2009/0023851 A1 describes a process for the production of an electrically conducting CNT-polymer-composite material. In this process the CNTs are dispersed in a polymer melt in a twin shaft screw extruder to form a mixture and the mixture is then extruded. For a reduction of the CNT agglomerates it is suggested to add the CNT agglomerates to the solid polymer granulate before the melting zone of the extruder. The additional friction provided by the polymer granulate and a high energy input are described to reduce the number and size of the CNT agglomerates and to improve the distribution of CNTs in the polymer.

WO 2012/031989 A1 describes a further process for the production of polymer-CNT-composite materials with an improved dispersion of the CNTs. In this process the CNT agglomerates with an average agglomerate size in the range from 0.02 mm to 6 mm are contacted with an impregnation material and then incorporated into the thermoplastic polymer or reactive resin. Due to the impregnation material, the CNT agglomerates disrupt upon incorporation into the polymer melt, thus obviating the need for a predispersion or a high energy input for reducing the agglomerates. However, depending on the type of impregnation material used, it may negatively impact on the quality, stability and/or mechanical properties of the final composite material. In principle it is desirable to minimize the amount of impregnating material in the final composite material.

### SUMMARY OF THE INVENTION

In light of the state of the art, the problem underlying the invention is the provision of a process for the manufacture of a composite material comprising a filler and a thermoplastic polymer or a reactive resin, whereby a sufficiently fine dispersion of the filler material is achieved resulting in a high quality end product, i.e. composite material.

This problem is solved according to the present disclosure by a process for the preparation of a composite material comprising a filler and a thermoplastic polymer or reactive resin in an extrusion system, wherein the extrusion system contains at least one extruder, and the process comprises the steps of:
a) providing a carrier with a low viscosity, that is at least not fully miscible with the polymer;
b) adding the filler, the low viscosity carrier and the thermoplastic polymer or reactive resin to at least one feeder and/or other entry point of the extrusion system;
c) conveying the filler, the low viscosity carrier and the thermoplastic polymer or reactive resin through the extrusion system, whereby the components are mixed;
d) collecting the extruded product containing the filler-thermoplastic polymer composite material from a product outlet of the extrusion system; and
e) collecting the low viscosity carrier separately from the product from at least one further outlet of the extruder.

Subject matter of the present disclosure is furthermore the use of an extruder for compounding a composite material comprising a filler and a thermoplastic polymer or reactive resin in the presence of a low viscosity carrier, characterized in that the low viscosity carrier is collected through an outlet of the extruder, which is different from the product outlet of the extruder.

The process according to the invention has the advantage that the additive or impregnating material, i.e. the low viscosity carrier, which is important for the dispersion but often unwanted in the final product, is removed from the system still during the extrusion process and therefore is present in reduced levels in the final composite material obtained. It was surprisingly found that the low viscosity carrier must not necessarily exit the extruder together with the extruded composite material through the product outlet. Rather, the low viscosity carrier seems to stay long enough in the mixture to allow a dispersion of the filler, i.e. a mass transfer of the filler from the low viscosity carrier to the thermoplastic polymer or reactive resin. However, the low viscosity carrier may then be collected through a further outlet of the extruder while the remaining melt comprising the filler and the thermoplastic polymer remains in the extruder and eventually exits via the product outlet of the extruder. Accordingly, no additional process step is required for the removal of the low viscosity carrier. It can be removed directly during the conventional extrusion process. Moreover, the low viscosity carrier retrieved from the extruder may be reused in step b) of the process, thereby minimizing waste accumulation and reducing the amount of resources required for the manufacturing process.

"Further outlet" as used herein means an additional outlet of the extruder which is different from the conventional product outlet. The further outlet can be formed by any opening of the extruder which is different from the openings formed by the feeder and the product outlet of the extruder.

### DETAILED DESCRIPTION

In one embodiment of the present disclosure, the further outlet in the extruder is located such that gravity supports the low viscosity carrier exiting the extruder through the further outlet. This is understood to mean that the low viscosity carrier is transported to the further outlet at least in part by gravity or that gravity causes the low viscosity carrier to accumulate in the region around the further outlet. For example, the further outlet may be located in a bottom wall of the extruder. This embodiment facilitates the collection of the low viscosity carrier.

The process disclosed herein is useful for preparing composite materials comprising a filler and a thermoplastic polymer or reactive resin in the presence of a low viscosity carrier. The process of the present disclosure is applicable to a wide range of possible thermoplastic polymer-filler systems in which a fine dispersion of the filler in the polymer matrix is desired. Examples of possible fillers that can be used in the process of the present disclosure include but are not limited to CNTs, carbon blacks, metal oxides, clays, talcum, ashes and pigments.

In a particular embodiment of the present disclosure, the filler is a material having a high specific surface. Preferably the specific surface is at least 10 m²/g, preferably at least 50 m²/g, especially at least 100 m²/g. It is assumed that the high specific surface of the filler and the resulting increased interactions of the filler surface and the low viscosity carrier increase the residence time of the low viscosity carrier in the extrusion system. Practical experiments have shown that a filler with a high specific surface is beneficial as the filler then shows a reduced tendency to exit together with the low viscosity carrier through the further outlet in the extruder. Apparently the longer residence time allows enough time for an efficient mass transfer to take place, thereby ensuring a sufficient purity of the collected low viscosity carrier. According to a preferred embodiment, the low viscosity carrier that is collected from the further outlet of the extruder in step e) of the process disclosed herein is essentially free of filler, e.g. contains filler in an amount of less than 10 % by weight, especially less than 3 % by weight.

According to a preferred embodiment of the present disclosure, CNTs are used as filler. Both single-wall CNTs (SWNTs) as well as multi-wall CNTs (MWNTs) can be used as filler in the process according to the present disclosure. With respect to their wall architecture, CNTs that can be employed in the process disclosed herein may for example be of the cylinder-type, the scroll-type, the multi-scroll-type, the cup-stacked type or the onion-like structure.

If cylinder type CNTs are used, each CNT may comprise only one cylinder (cylindrical SWNTs) or a plurality of cylinders (cylindrical MWNTs) stacked one into the other (for example described in U.S. 5,747,161, WO 86/03 455).

CNTs of the scroll-type are also known to the person skilled in the art. They consist of only one continuous or discontinuous graphene layer and are generally MWNTs due to several windings of the layer. In contrast, multi-scroll MWNTs consist of a plurality of graphene sheets, which are present together in a stack and rolled up as described in DE 10 2007 0440 31 A1. The individual graphene or graphite layers in the carbon nanotubes of the multi-scroll-type go from the centre of a cross section to the outer edge without interruption. This can enable, for example, improved and faster intercalation of other materials in the tube structure, because more open edges as entry zones of the intercalates are available compared to carbon nanotubes by a simple scroll structure (Carbon 1996, 34, 1301-3). CNTs with an onion-like structure are for example described in Science 1994, 263, 1744-7. CNTs of the cupstake-type consist of conical cups that are closed at one end or open at both ends (for example, in EP-A 198.558 and U.S. 7,018,601 B2).

The process according to the present disclosure works particularly well when MWNTs are used as filler. The preferred MWNTs can be of the cylinder-type, scroll type, multi-scroll-type and cup-stacked type or mixtures thereof. It is beneficial if the carbon nanotubes have a ratio of length to outer diameter of more or equal to 5, preferably more or equal to 50, especially more or equal to 100. The higher the ratio of length is to the outer diameter, the lower is the carbon nanotube content necessary to achieve percolation.

According to a particular embodiment of the present disclossure, the thermoplastic polymer is selected from the group consisting of polyamides (PA), in particular selected from polyamide 6 (PA6), polyamide 6.6 (PA66) and polyamide 12 (PA12), polycarbonate (PC), homopolymers and copolymers of polyoxymethylene (POM), thermoplastic polyurethanes (TPU), polyolefins, polypropylene (PP), polyethylene (PE), ultra high molecular weight polyethylene (UHMWPE), polyethylene terephthalate (PET), polybutylene terephthalate (PBT), polyacrylate, polymethylmetacrylate (PMMA), styrene polymers (PS), high impact polystyrene (HiPS), polyacrylonitrile (PAN), Polystyrenacrylnitrile (SAN), acylnitrile styrene acrylate (ASA) polyacrylnitrilbutadienstyrene (ABS), polyvinyl chloride (PVC), polyether imide (PEI), polyetheretherketone (PEEK), polyphenylensulfide (PPS), polysulfon (PSU), polyphenylene oxide (PPO), polyphenylene ether (PPE), fluorinated polymers, in particular selected from polyvinylidenfluoride (PVDF), ethylen-tetrafluorethylene (ETFE)and fluoronated ethylene propylene (FEP), or blends, co-polymers or modifications thereof. Practical experiments have shown that the process according to the present disclosure is particularly suited for the manufacture of composite materials, wherein the thermoplastic polymer is selected from PA6, PA66, PA12, PP, PE, UHMWPE, PS, PVDF and PAN.

A "reactive resin" as used herein is a reaction mixture which forms a polymer by chemical reactions taking place, for example, in the extruder. Examples for reactive resins are polyurethanes as well as phenolic and epoxy resin forming systems.

In one embodiment of the process according to the present disclosure, the reactive resin system is selected from epoxides, phenolic resins, unsaturated polyesters and/or amino resins. The epoxides are, in particular, those based on bisphenol A and/or bisphenol F. The polyurethanes are particularly those based on aromatic diisocyanates such as toluene-2,4-diisocyanate TDI and/or diphenylmethane diisocyanate MDI or aliphatic diisocyanates such as hexamethylene diisocyanate, HDI and/or 3-isocyanatomethyl-3 ,5,5-trimethylcyclohexyl IPDI and/or 4,4'-diisocyanatodicyclohexylmethane H12-MDI.

It is important that the low viscosity carrier is at least not fully miscible with the thermoplastic polymer or reactive resin. If it is fully miscible, than no separation will occur and it will not be possible to separately collect the low viscosity carrier. In the present disclosure "not fully miscible" means that in the binary system of the low viscosity carrier and the thermoplastic polymer or reactive resin a certain degree of phase separation is observable, e.g. by microscopy, and/or a miscibility gap exists.

According to one embodiment of the process the low viscosity carrier is inert, i.e. not reactive with either the CNTs or the polymer or resin used in the process. However, if a reaction of a certain low viscosity carrier and a certain polymer is advantageous for the final composite material this low viscosity carrier may also be selected for the process according to the present disclosure.

According to a preferred embodiment, the filler shows higher affinity with the polymer melt or the reactive resin than with the low viscosity carrier, in particular at the temperature present in the extruder. This higher affinity of the filler with the polymer melt or the reactive resin compared to the low viscosity carrier was found to be thermodynamically advantageous because the mass transfer, i.e. extraction process, of the filler from the low viscosity carrier to the polymer melt or reactive resin will occur faster. Accordingly, the low viscosity carrier that is collected from the further outlet of the extruder will contain less of the filler material. This has the advantage that less filler material is removed from the process when the low viscosity carrier is collected and the collected low viscosity carrier is of higher purity.

According to a particular embodiment of the present disclosure, the low viscosity carrier is removed as a liquid. The viscosity of the low viscosity carrier is lower than the viscosity of the polymer melt at the average process temperature in the extruder. According to a preferred embodiment, the low viscosity carrier has a melt viscosity of below 30 Pa·s. In particular, the low viscosity carrier can have a viscosity at the process temperature in steps c) and d) in the range of from 30 Pa·s to 0.001 Pa·s. If the viscosity of the low viscosity carrier exceeds 30 Pa·s, it has proven difficult to collect a significant amount of low viscosity carrier from the further outlet of the extruder. A viscosity of the low viscosity carrier lower than 0.001 Pa·s seems to result in high concentrations of filler in the collected low viscosity carrier because of the high flow rate and the short time available for extraction of the low viscosity carrier from the filler. More preferably, the viscosity at the average process temperature in the extruder is in the range of from 10 Pa·s to 0.001 Pa·s, in particular from 1 Pa·s to 0.001 Pa·s. This range provides a particularly good ratio of yield and purity of the collected low viscosity carrier. In addition, the amount of low viscosity carrier in the composite material end product was found to be very low, if the above stated preferred viscosity ranges are observed.

For the yield and purity of the collected low viscosity carrier the viscosity of the polymer melt is preferably 10 times higher, more preferably 100 times higher, than the viscosity of the low viscosity carrier at the process temperature in steps c) and d).

According to a further embodiment of the present disclosure the low viscosity carrier material is selected from or comprises at least one member of the group consisting of plant, animal or synthetic fat, cooking or frying oil, grease, dripping, polyethylenglycol (PEG), cyclic butylen terephtalat (CBT), polyalkylethers and -esters, e.g. polypropylenglycol (PPG) or copolyethers, wax, e.g. of polyethylenederivatives, bees wax, alkyl esters based on glycerol, sugars e.g. erythritol, alkyl esters of alkylols or alkyl acids, e.g. citric acid, adipic acid, sebacic acid, alkyl esters of acids containing phosphorous or sulphur, plasticizers, flame retardant, stabilizers, lubricants, ionic liquids, rheology influencing additives and components from reactive systems.

"Drippings" as used herein are fats and oils from vegetable or animal sources that may for example be commercially available for cooking and/or frying purposes. Vegetable fats that may be used as low viscosity carrier in the process disclosed herein may in particular comprise or consist of cocoa butter, coconut oil, palm kernel oil and palm oil, colza oil, sunflower oil, soy bean oil, linseed oil, and margarine. Preferably, vegetable fats according to the present disclosure are hardened, i.e. hydrogenated in order to remove double bonds, and selected from hardened coconut and palm oil. Surprisingly it was shown that hardened coconut and palm oil show very good results in terms of dispersion of the filler material, i.e. CNTs, in the thermoplastic polymer melt but also show superior results in terms of yield and purity when collected from the system through the further outlet of the extruder.

Plasticizers according to the present disclosure are additives that increase the plasticity or fluidity of a given material. Examples of plasticizers that may be used as low viscosity carrier in the process of the present disclosure are esters of carboxylic acids, citrates, e.g. trioctyl citrate or acetyl trihexyl citrate, maleates e.g. dibutyl maleate, sebacates e.g. dibutyl sebacate, adipates e.g. dioctyladipate and organophosphates, e.g. tributylphosphate or polyol/ polyesters e.g. triethylene glycol dihexanoate. These plasticizers have the advantage that they do not necessarily have to be completely removed from the process because - besides acting as dispersing agent - they may provide desired properties to the end product as well.

Stabilizers for polymers according to the present disclosure are all kinds of substances that can protect polymers from deleterious effects such as oxidation, chain scission and uncontrolled recombinations and cross-linking reactions. Examples for stabilizers of polymers include hindered amine light stabilizers (HALS), UV-absorber, antioxidants and antiozonants. Further examples of eligible stabilizers for the process of the present disclosure are epoxidized soy beanoil, diimides, thioesters. Preferably stabilizers according to the present disclosure are selected from amide, e.g. 1,3,5-Triazine-2,4,6-triamine, N,N"'-[1,2-ethanediyl-bis[[[4,6-bis-[butyl(1,2,2,6,6-pentamethyl-4-piperidinyl) amino]-1,3,5-triaszine-2-yl]imino]-3,1-propanediyl]]bis[N',N"-dibutyl-N',N"-bis(1,2,2,6,6-pentamethyl-4-piperidinyl)-, thioesters, e.g. Dilauryl thiodipropionate, Dimyristyl thiodipropionate, Distearyl thiodipropionate, Pentaerythrityl tetrakis(3-laurylthiopropionate), Ditridecyl thiodipropionate, hindered amines e.g. 1,3,5-Triazine-2,4,6-triamine, N,N"'-[1,2-ethanediyl-bis[[[4,6-bis-[butyl(1,2,2,6,6-pentamethyl-4-piperidinyl) amino]-1,3,5-triaszine-2-yl]imino]-3,1-propanediyl]]bis[N',N"-dibutyl-N',N"-bis(1,2,2,6,6-pentamethyl-4-piperidinyl)-, Decanedioic acid, bis(2,2,6,6-tetramethyl-1-(octyloxy)-4-piperidinyl)ester, reaction products with 1,1-dimethylethylhydroperoxide and octane, Bis(1,2,2,6,6-pentametlryl-4-piperidinyl) sebacate, Bis(2,2,6,6-tetramethyl-4-piperidinyl) sebacate and metal soaps of Ca, Ba, Mg or Zn such as calcium stearate, barium stearate, magnesium stearate or zinc stearate.

Examples of components of reactive systems include epoxy-functionalized or containing compounds, hardeners based on amines or carboxylic acid, unsaturated polyesters, isocyanates, amines and alcohols and silicones.

In particular, the low viscosity carrier may be selected from or comprise at least one member of the group consisting of or derived from natural oils or hydrogenated natural oils.

The best-suited process temperature in the extrusion system depends on the type of polymer used. Furthermore the temperature has to be set in a manner that the low viscosity carrier and the polymer is in a liquid state and the vapour pressure of the low viscosity carrier is still at least 20 °C below its boiling point. According to a preferred embodiment, the average process temperature in the extruder is in the range of the processing temperature of the polymer, in particular as given in the data sheet of the respective polymer manufacturer. Preferably, the average process temperature in the extruder is in the range of between 180 °C and 400 °C.

The filler and the low viscosity carrier may be premixed before adding to the polymer melt in the extrusion system. According to a particular embodiment, the filler is soaked in the low viscosity carrier prior to extrusion. According to another embodiment of the present disclosure, a masterbatch comprising the filler and the low viscosity carrier is prepared and added to the thermoplastic polymer before, upon feeding into the extruder or during extrusion. A premixing may be advantageous for efficient dispersion of the filler, in particular, in case of CNTs being used as filler, disruption of CNT agglomerates that may have formed. However, it also possible to mix all three components, namely filler, low viscosity carrier and the thermoplastic polymer or reactive resin and add the mixture to the extruder. Alternatively, all three components may be added separately in any order. Mixing of filler and low viscosity carrier before addition to the extruder generally provides a good residence time for the low viscosity carrier in the extrusion system.

The extrusion system used in the process according to the present disclosure contains at least one extruder. Extruders used in the process may be single-screw or twin-screw extruders, buss kneader, planetary extruders or ring extruders. The extruder(s) that can be used in the process according to the present disclosure may be commercially available ones. However, for the purpose of the invention the extruders may also be modified, e.g. by introducing one or more further outlets into the extruder, such as for example openings in the bottom wall of the housing of the extruder. The extrusion system according to the present disclosure is characterized by at least one further outlet in the extruder, which is different from the product outlet of the extruder. The further outlet may for example be in the bottom wall of the extruder. In one embodiment of the process of the invention there are at least two further outlets in the extruder, which may for example both be in the bottom wall of the extruder. According to a further embodiment, there are at least four further outlets present for collection of the low viscosity carrier. With more than one outlet available, higher yields of low viscosity carrier may be collected during the process. The process step of mixing the components and the process step of collecting the low viscosity carrier may also be spatially and/or temporally separated independently from each other. For example, the mixing may be performed in a first extruder and the collection may be performed in a second extruder.

According to a further embodiment of the present disclosure, the further outlet in the extruder, such as e.g. in the bottom wall of the extruder, may be connected to a valve from which - when open - the low viscosity carrier can be collected. The further outlet in the extruder, in particular in the bottom wall of the extruder, through which the low viscosity carrier is collected, may also be connected to a vent. The further outlet(s) in the extruder may also be in the form of pre-existing degassing vents that are otherwise used to remove water vapour or other gaseous components from the polymer melt during extrusion. Preferably, the degassing vents are oriented such that gravity supports the low viscosity carrier exiting the extruder through the further outlet formed by the degassing vent. In one embodiment of the present disclosure, in particular if a commercially available extruder with a pre-installed degassing vent is used, the extruder is arranged in an orientation of about 90° to about 180° rotation along its long axis. For example, if a 180°C rotation of the extruder is realized then this corresponds to an "upside-down" orientation. If a pre-installed degassing vent is present (which usually faces upwards), such an arrangement of the extruder leads to the degassing vent facing side- (in case of closer to 90° rotation) or downwards (in case of closer to 180° rotation), which allows easy collection of the low viscosity carrier through the further outlet formed by the degassing vent.

In one embodiment of the process according to the present disclosure, the components are conveyed through two consecutive extruders in the extrusion system. Preferably, the low viscosity carrier is collected from at least one further outlet that may, for example, be located in the bottom wall of the second extruder. In this set-up the first extruder is mainly used for dispersion and compounding and the second extruder is used for recollecting/removing the low viscosity carrier. This set-up generates a high average residence time of the low viscosity carrier in the extruder and consequently leads to an improved purity of the collected low viscosity carrier.

In another embodiment of the process an extruder with a vent is used, wherein the vent forms the at least one further outlet, and wherein the extruder is oriented such that the vent points into a side- or downward direction, preferably with an angle of between 0° and 90°, more preferably with an angle of between 10° and 90° to the horizontal plane. The horizontal plane is understood to mean a plane perpendicular to the direction of gravity.

The average residence time of the masses conveyed through the extruder before reaching the further outlet may be in the range from 15 s to 15 min, preferably in the range from 30 s to 10 min, in particular in the range from 60 s to 5 min. An average residence time below 15 s was found to hinder sufficient filler transfer from the low viscosity carrier, thereby elevating the likelihood of impurities. Average residence times higher than 15 min. do not seem to allow an economical realization of the process and may lead to thermal degradation of the polymer, the filler or the low viscosity carrier. It was surprisingly found that the best yield and purity was obtained with an average residence time in the range from 1 min. to 3 min.

The present disclosure also concerns the use of an extruder for compounding a composite material comprising a filler and a thermoplastic polymer or reactive resin in presence of a low viscosity carrier, wherein the low viscosity carrier is collected through at least one further outlet of the extruder, which further outlet is different from the product outlet of the extruder, as has been described in detail above.

In particular, the low viscosity carrier can be collected through a further outlet of the extruder, which further outlet is located such that gravity supports the low viscosity carrier exiting the extruder through the further outlet. Preferably the further outlet is located in a bottom wall of the extruder.

In another embodiment of the use an extruder with a vent is used, wherein the vent forms the at least one further outlet, and wherein the extruder is oriented such that the vent points into a side- or downward direction, preferably with an angle of between 0° and 90°, more preferably with an angle of between 10° and 90° to the horizontal plane.

### BRIEF DESCRIPTION OF THE DRAWINGS

Further features and advantages of the present disclosure will emerge from the following detailed description of some of its embodiments shown by way of non-limiting examples in the accompanying drawing, in which:

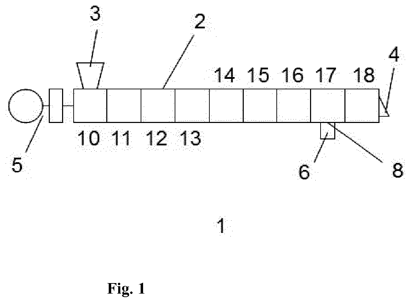

- Fig. 1: shows a schematic overview of an extrusion system according to the present disclosure with a conventional extruder that is arranged upside down.

The extrusion system 1 according to Fig. 1 consists essentially of a twin-screw extruder 2 with a feeder 3, a product outlet 4 and vent 6. The screw shaft (not shown) is driven by a motor 5. The twin-screw extruder 2 comprises a housing consisting of nine parts in which the screw shafts (not shown) are arranged. A solids conveying zone, which preferably consists of thread elements with a pitch equal to twice the screw shaft diameter (abbreviated to: 2 D) to 0.9 D, is located in the region of housing parts 10 and 11. A melting zone, which preferably consists of kneading blocks and heating elements, is located in the housing parts 12 and 13. By means of the thread elements of the solids conveying zone, the carbon nanotubes are conveyed to the melting zone. Moreover, the carbon nanotubes are pre-dispersed in the solids conveying zone by frictional forces between the solids. In the region of the housing parts 14 to 16, a post dispersion zone is provided downstream of the melting zone 12 to 13. The post-dispersion zone comprises kneading and mixing elements which produce a frequent of the melt flows and a broad residence time distribution. The housing part 17 contains a further outlet 8 in its bottom wall. This further outlet is connected to a vent 6. In a common screw extruder this vent 6 is located in the upper part of the housing and used for degassing the system. However, in the extruder system 1 according to Fig. 1 the extruder 2 is arranged in an orientation of a 180° rotation along its long axis and therefore the vent 6 is located in the bottom wall. The last housing part 18 contains a pressure build-up zone, at the end of which the compounded product leaves the extruder.

In one embodiment of the process of the invention the thermoplastic polymer is transported via metering screws to the feeder 3 of the twin-screw extruder 2 of the extrusion system 1. The polymer then is melted in the melting zone in housing parts 12 and 13. The filler is mixed with the low viscosity carrier and transferred via the feeder 3 to solids conveying zone in the housing parts 10, 11 and where it is pre-dispersed and conveyed to the melting zone and there added to the thermoplastic polymer melt. In the melting zone the main dispersion of the filler in the polymer occurs. The components are consequently conveyed to the post-dispersion zone in housing pars 14 to 16, where the fine dispersion takes place. A long residence time in this post-dispersion zone is important for a uniform distribution of the filler in the polymer. When the vent 6 that is connected to the further outlet 8 of the bottom part of housing 17 is opened, the low viscosity carrier flows out of the vent and can be easily collected.

### EXAMPLES

### Example 1

PA 6 (Durethan B29 from Lanxess) is added to the feeder of the extruder and melted in the melting zone. A twin-screw extruder ZSK-26 Megacompounder (Coperion) with a length to diameter ratio (L/D) of 37 is arranged in an orientation of a 180° rotation along its long axis. MWNTs (Baytubes® C 150 P from Bayer MaterialScience AG, BET 220 m²/g) are mixed with a mixture of hydrogenated and non-hydrogenated, liquified coconut oil (Palmin® from Peter Kölln KGaA) in a weight ratio of 66 wt.-% Baytubes® and 34 wt.-% coconut oil. This mixture is added through the feeder into the polymer melt and incorporated into the polymer while being conveyed along the extruder. The concentration of Baytubes® in the composite was adjusted to 3 wt.-%. From the further outlet formed by the vent the low viscosity carrier is collected. The weight of collected coconut oil is compared with the weight added to the extruder revealing that a percentage of 25 wt.-% was collected. The colour of the collected carrier was slightly yellow. The purity of the low viscosity carrier is determined by removing the carrier by evaporation under reduced pressure to be 99.5 wt.-%

### Example 2

PC (Makrolon® 2600 from Bayer MaterialScience AG) is added to the feeder of the extruder and melted in the melting zone. A twin-screw extruder ZSK-26 Megacompounder (Coperion) with a length to diameter ratio (L/D) of 37 is arranged in an orientation of a 180° rotation along its long axis. MWNTs (Baytubes® C 150 P from Bayer MaterialScience AG, BET 220 m²/g) are mixed with 2-octyl dodecyl stearate (Loxiol® 3820 from Emery Oleochemicals) in a weight ratio of 66 wt.-% Baytubes® and 34 wt.-% Loxiol®. This mixture is added through the feeder into the polymer melt and incorporated into the polymer while being conveyed along the extruder. The concentration of Baytubes® in the composite was adjusted to 3 wt.-%. From the further outlet formed by the vent the low viscosity carrier is collected. The weight of collected Loxiol® is compared with the weight added to the extruder revealing that a percentage of 18 wt.-% was collected. The colour of the collected Loxiol® was black. The purity of the low viscosity carrier is determined by removing the carrier by evaporation under reduced pressure to be 98 wt.-%.

## Claims

1. A process for the preparation of a composite material comprising a filler and a thermoplastic polymer or reactive resin in an extrusion system (1), wherein the extrusion system (1) contains at least one extruder (2), and the process comprises the steps of:
a) providing a carrier with a low viscosity, that is at least not fully miscible with the polymer;
b) adding the filler, the low viscosity carrier and the thermoplastic polymer or reactive resin to at least one feeder (3) and/or other entry point of the extrusion system (1);
c) conveying the filler, the low viscosity carrier and the thermoplastic polymer or reactive resin through the extrusion system (1), whereby the components are mixed;
d) collecting the extruded product containing the filler-thermoplastic polymer composite material from a product outlet (4) of the extrusion system (1); and
e) collecting the low viscosity carrier separately from the product from at least one further outlet (8) of the extruder (2),
**characterized in that** the further outlet (8) is located in a bottom wall of the extruder (2) such that gravity supports the low viscosity carrier exiting the extruder (2) as a liquid through the further outlet (8) and **in that** the process temperature in the extrusion system (1) is set in a manner that the low viscosity carrier and the polymer are in a liquid state and the vapour pressure of the low viscosity carrier is still at least 20°C below its boiling point.

2. The process according to claim 1, wherein the low viscosity carrier that is collected from the at least one further outlet (8) of the extruder (2) is returned to the feeder (3) of the extrusion system (1).

3. The process according to claim 1 or 2, wherein the filler has higher affinity to the polymer melt than to the low viscosity carrier.

4. The process according to any one of claims 1 to 3, wherein the filler has a high specific surface.

5. The process according to claim 4, wherein the filler has a specific surface of at least 10 m²/g.

6. The process according to any one of claims 1 to 5, wherein the filler comprises or consists of carbon nanotubes (CNTs).

7. The process according to claim 6, wherein the filler comprises or consists of multi-walled carbon nanotubes (MWNTs).

8. The process according to any one of claims 1 to 7, wherein the low viscosity carrier has a viscosity in the range of from 30 Pa·s to 0.001 Pa·s.

9. The process according to claim 8, wherein the low viscosity carrier has a viscosity in the range of from 10 Pa·s to 0.001 Pa·s or in the range of from 1 Pa·s to 0.001 Pa·s.

10. The process according to any one of claims 1 to 9, wherein the low viscosity carrier is selected from or comprises at least one member of the group consisting of plant, animal or synthetic fat, cooking or frying oil, grease, dripping, polyethylene glycol (PEG), cyclic butylene terephthalate (CBT), polyalkylethers and -esters, wax, alkyl esters based on glycerol, sugars, alkyl esters of alkylols or alkyl acids, alkyl esters of acids containing phosphorous or sulphur, plasticizers, flame retardant, stabilizers and components from reactive systems, or combinations thereof.

11. The process according to claim 10, wherein the low viscosity carrier is selected from or comprises at least one member of the group consisting of or derived from natural oils or hydrogenated natural oils, or combinations thereof.

12. The process according to any one of claims 1 to 11, wherein the thermoplastic polymer is selected from polyamides (PA), polycarbonate (PC), homopolymers and copolymers of polyoxymethylene (POM), thermoplastic polyurethanes (TPU), polyolefins, polypropylene (PP), polyethylene (PE), ultra high molecular weight polyethylene (UHMWPE), polyethylene terephthalate (PET), polybutylene terephthalate (PBT), polyacrylate, polymethylmethacrylate (PMMA), styrene polymers (PS), high impact polystyrene (HiPS), polyacrylonitrile (PAN), polystyreneacrylnitrile (SAN), acylnitrile styrene acrylate (ASA) polyacrylnitrilbutadienestyrene (ABS), polyvinyl chloride (PVC), polyether imide (PEI), polyetheretherketone (PEEK), polyphenylenesulfide (PPS), polysulfon (PSU), polyphenylene oxide (PPO), polyphenylene ether (PPE), fluorinated polymers, or blends, co-polymers or modifications thereof.

13. The process according to claim 12, wherein the thermoplastic polymer is selected from polyamide 6 (PA6), polyamide 6.6 (PA6.6), polyamide 12 (PA12), PP, PE, UHMWPE, PS, polyvinylidene fluoride (PVDF) and PAN.

14. The process according to any one of claims 1 to 13, wherein the filler and the low viscosity carrier are premixed before being added to the extrusion system (1).

15. The process according to any one of claims 1 to 14, wherein an extruder (2) with a vent (6) is used, wherein the vent (6) forms the at least one further outlet (8), and wherein the extruder (2) is oriented such that the vent (6) points into a side- or downward direction.

16. The process according to any one of claims 1 to 15, wherein the residence time of the components before reaching the further outlet (8) is in the range from 15 s to 15 min.

17. The process according to claim 16, wherein the residence time of the components before reaching the further outlet (8) is in the range from 30 s to 10 min or in the range from 60 s to 5 min.

18. A use of an extruder (2) with a product outlet (4) for compounding a composite material comprising a filler and a thermoplastic polymer or reactive resin in the presence of a low viscosity carrier, **characterized in that** the low viscosity carrier is collected through at least one further outlet (8) of the extruder (2) and exits the extruder (2) as a liquid; and **in that** an extruder (2) with a vent (6) is used, wherein the vent (6) forms the at least one further outlet (8), wherein the extruder (2) is oriented such that the vent (6) points into a side- or downward direction, and wherein the process temperature in the extruder (2) is set in a manner that the low viscosity carrier and the polymer are in a liquid state and the vapour pressure of the low viscosity carrier is still at least 20°C below its boiling point.

19. The process according to claim 15 or the use according to claim 18, wherein the vent (6) points into a side- or downward direction with an angle of between 0° and 90° or with an angle of between 10° and 90° to the horizontal plane.

## Patentansprüche

1. Verfahren zur Herstellung eines Verbundmaterials, das einen Füllstoff und ein thermoplastisches Polymer oder Reaktivharz umfasst, in einem Extrusionssystem (1), wobei das Extrusionssystem (1) mindestens einen Extruder (2) enthält und das Verfahren die Schritte:
a) eines Bereitstellens eines Trägers mit einer geringen Viskosität, der mindestens nicht vollständig mit dem Polymer mischbar ist;
b) eines Zugebens des Füllstoffs, des Trägers mit niedriger Viskosität und des thermoplastischen Polymers oder Reaktivharzes zu mindestens einer Zufuhrvorrichtung (3) und/oder einem anderen Einlasspunkt des Extrusionssystems (1);
c) eines Transportierens des Füllstoffs, des Trägers mit niedriger Viskosität und des thermoplastischen Polymers oder Reaktivharzes durch das Extrusionssystem (1), wodurch die Komponenten gemischt werden;
d) eines Sammelns des extrudierten Produkts, das das Füllstoff-thermoplastisches Polymer-Verbundmaterial enthält, von einem Produktauslass (4) des Extrusionssystems (1); und
e) eines Sammelns des Trägers mit niedriger Viskosität separat von dem Produkt von mindestens einem weiteren Auslass (8) des Extruders (2),
umfasst, dadurch charakterisiert, dass sich der weitere Auslass (8) in der Bodenwand des Extruders (2) befindet, so dass die Schwerkraft den Träger mit niedriger Viskosität unterstützt, den Extruder (2) als eine Flüssigkeit durch den weiteren Auslass (8) zu verlassen, und dass die Verfahrenstemperatur in dem Extrusionssystem (1) derart eingestellt wird, dass der Träger mit niedriger Viskosität und das Polymer in einem flüssigen Zustand vorliegen und der Dampfdruck des Trägers mit niedriger Viskosität immer noch mindestens 20°C unter seinem Siedepunkt ist.

2. Verfahren gemäß Anspruch 1, wobei der Träger mit niedriger Viskosität, der von dem mindestens einen weiteren Auslass (8) des Extruders (2) gesammelt wird, zu der Zufuhrvorrichtung (3) des Extrusionssystems (1) zurückgeführt wird.

3. Verfahren gemäß Anspruch 1 oder 2, wobei der Füllstoff eine höhere Affinität zu der Polymerschmelze als zu dem Träger mit niedriger Viskosität aufweist.

4. Verfahren gemäß einem jeglichen der Ansprüche 1 bis 3, wobei der Füllstoff eine hohe spezifische Oberfläche aufweist.

5. Verfahren gemäß Anspruch 4, wobei der Füllstoff eine spezifische Oberfläche von mindestens 10 m²/g aufweist.

6. Verfahren gemäß einem jeglichen der Ansprüche 1 bis 5, wobei der Füllstoff Kohlenstoffnanoröhren (CNTs) umfasst oder daraus besteht.

7. Verfahren gemäß Anspruch 6, wobei der Füllstoff mehrwandige Kohlenstoffnanoröhren (MWNTs) umfasst oder daraus besteht.

8. Verfahren gemäß einem jeglichen der Ansprüche 1 bis 7, wobei der Träger mit niedriger Viskosität eine Viskosität im Bereich von 30 Pa·s bis 0,001 Pa·s aufweist.

9. Verfahren gemäß Anspruch 8, wobei der Träger mit niedriger Viskosität eine Viskosität im Bereich von 10 Pa·s bis 0,001 Pa·s oder im Bereich von 1 Pa·s bis 0,001 Pa·s aufweist.

10. Verfahren gemäß einem jeglichen der Ansprüche 1 bis 9, wobei der Träger mit niedriger Viskosität aus der Gruppe, die aus Pflanzen-, Tier- oder synthetischem Fett, Koch- oder Fritieröl, Schmierfett, Bratfett, Polyethylenglykol (PEG), cyclischem Butylenterephthalat (CBT), Polyalkylethern und -estern, Wachs, auf Glycerin basierenden Alkylestern, Zuckern, Alkylestern von Alkylolen oder Alkylsäuren, Alkylestern von phosphor- oder schwefelhaltigen Säuren, Weichmachern, Flammschutzmittel, Stabilisatoren und Komponenten aus Reaktivsystemen besteht, oder Kombinationen davon ausgewählt ist oder mindestens ein Mitglied der Gruppe oder Kombinationen davon umfasst.

11. Verfahren gemäß Anspruch 10, wobei der Träger mit niedriger Viskosität aus der Gruppe, die aus natürlichen Ölen oder hydrogenierten natürlichen Ölen besteht oder davon abgeleitet ist, oder Kombinationen davon ausgewählt ist oder mindestens ein Mitglied der Gruppe oder Kombinationen davon umfasst.

12. Verfahren gemäß einem jeglichen der Ansprüche 1 bis 11, wobei das thermoplastische Polymer aus Polyamiden (PA), Polycarbonat (PC), Homopolymeren und Copolymeren von Polyoxymethylen (POM), thermoplastischen Polyurethanen (TPU), Polyolefinen, Polypropylen (PP), Polyethylen (PE), Polyethylen mit ultrahohem Molekulargewicht (UHMWPE), Polyethylenterephthalat (PET), Polybutylenterephthalat (PBT), Polyacrylat, Polymethylmethacrylat (PMMA), Styrolpolymeren (PS), hochschlagzähem Polystyrol (HiPS), Polyacrylonitril (PAN), Polystyrolacrylnitril (SAN), Acylnitrilstyrolacrylat (ASA), Polyacrylnitrilbutadienstyrol (ABS), Polyvinylchlorid (PVC), Polyetherimid (PEI), Polyetheretherketon (PEEK), Polyphenylensulfid (PPS), Polysulfon (PSU), Polyphenylenoxid (PPO), Polyphenylenether (PPE), fluorierten Polymeren oder Gemischen, Copolymeren oder Modifikationen davon ausgewählt ist.

13. Verfahren gemäß Anspruch 12, wobei das thermoplastische Polymer aus Polyamid 6 (PA6), Polyamid 6.6 (PA6.6), Polyamid 12 (PA12), PP, PE, UHMWPE, PS, Polyvinylidenfluorid (PVDF) und PAN ausgewählt ist.

14. Verfahren gemäß einem jeglichen der Ansprüche 1 bis 13, wobei der Füllstoff und der Träger mit niedriger Viskosität vorgemischt werden, bevor sie zu dem Extrusionssystem (1) gegeben werden.

15. Verfahren gemäß einem jeglichen der Ansprüche 1 bis 14, wobei ein Extruder (2) mit einer Lüftungsöffnung (6) verwendet wird, wobei die Lüftungsöffnung (6) den mindestens einen weiteren Auslass (8) ausbildet und wobei der Extruder (2) derart orientiert ist, dass die Lüftungsöffnung (6) seitwärts oder abwärts zeigt.

16. Verfahren gemäß einem jeglichen der Ansprüche 1 bis 15, wobei die Verweilzeit der Komponenten vor Erreichen des weiteren Auslasses (8) im Bereich von 15 s bis 15 min liegt.

17. Verfahren gemäß Anspruch 16, wobei die Verweilzeit der Komponenten vor Erreichen des weiteren Auslasses (8) im Bereich von 30 s bis 10 min oder im Bereich von 60 s bis 5 min liegt.

18. Verwendung eines Extruders (2) mit einem Produktauslass (4) zum Compoundieren eines Verbundmaterials, das einen Füllstoff und ein thermoplastisches Polymer oder Reaktivharz umfasst, in der Gegenwart eines Trägers mit niedriger Viskosität, dadurch charakterisiert, dass der Träger mit niedriger Viskosität durch mindestens einen weiteren Auslass (8) des Extruders (2) gesammelt wird und den Extruder (2) als eine Flüssigkeit verlässt und dass ein Extruder (2) mit einer Lüftungsöffnung (6) verwendet wird, wobei die Lüftungsöffnung (6) den mindestens einen weiteren Auslass (8) ausbildet, wobei der Extruder (2) derart orientiert ist, dass die Lüftungsöffnung (6) seitwärts oder abwärts zeigt, und wobei die Verfahrenstemperatur in dem Extruder (2) derart eingestellt wird, dass der Träger mit niedriger Viskosität und das Polymer in einem flüssigen Zustand vorliegen und der Dampfdruck des Trägers mit niedriger Viskosität immer noch mindestens 20°C unter seinem Siedepunkt ist.

19. Verfahren gemäß Anspruch 15 oder Verwendung gemäß Anspruch 18, wobei die Lüftungsöffnung (6) seitwärts oder abwärts mit einem Winkel zwischen 0° und 90° oder mit einem Winkel zwischen 10° und 90° zu der horizontalen Ebene zeigt.

## Revendications

1. Procédé pour la préparation d'un matériau composite comprenant une charge et un polymère thermoplastique ou une résine réactive dans un système d'extrusion (1), où le système d'extrusion (1) contient au moins une extrudeuse (2), et le procédé comprend les étapes de:
a) fourniture d'un support ayant une faible viscosité, qui est au moins non totalement miscible avec le polymère;
b) addition de la charge, du support de faible viscosité et du polymère thermoplastique ou de la résine réactive dans au moins un dispositif d'alimentation (3) et/ou autre point d'entrée du système d'extrusion (1);
c) acheminement de la charge, du support de faible viscosité et du polymère thermoplastique ou de la résine réactive à travers le système d'extrusion (1), par lequel les composants sont mélangés;
d) collecte du produit extrudé contenant le matériau composite charge-polymère thermoplastique issu d'une sortie de produit (4) du système d'extrusion (1); et
e) collecte du support de faible viscosité séparément du produit à partir d'au moins une autre sortie (8) de l'extrudeuse (2);
**caractérisé en ce que** l'autre sortie (8) est située dans une paroi inférieure de l'extrudeuse (2) de telle sorte que la pesanteur soutient le support de faible viscosité sortant de l'extrudeuse (2) sous forme d'un liquide à travers l'autre sortie (8) et **en ce que** la température de traitement dans le système d'extrusion (1) est fixée de telle manière que le support de faible viscosité et le polymère sont à l'état liquide et que la tension de vapeur du support de faible viscosité est encore d'au moins 20°C inférieure à son point d'ébullition.

2. Procédé selon la revendication 1, dans lequel le support de faible viscosité qui est collecté à partir de la au moins une autre sortie (8) de l'extrudeuse (2) est renvoyé au dispositif d'alimentation (3) du système d'extrusion (1).

3. Procédé selon la revendication 1 ou 2, dans lequel la charge a une affinité plus élevée pour la fusion du polymère que pour le support de faible viscosité.

4. Procédé selon l'une quelconque des revendications 1 à 3, où la charge a une surface spécifique élevée.

5. Procédé selon la revendication 4, où la charge a une surface spécifique d'au moins 10 m²/g.

6. Procédé selon l'une quelconque des revendications 1 à 5, où la charge comprend ou consiste en des nanotubes de carbone (CNTs).

7. Procédé selon la revendication 6, où la charge comprend ou consiste en des nanotubes de carbone à parois multiples (MWNTs).

8. Procédé selon l'une quelconque des revendications 1 à 7, où le support de faible viscosité a une viscosité dans l'intervalle de 30 Pa.s à 0,001 Pa.s.

9. Procédé selon la revendication 8, où le support de faible viscosité a une viscosité dans l'intervalle de 10 Pa.s à 0,001 Pa.s ou dans l'intervalle de 1 Pa.s à 0,001 Pa.s.

10. Procédé selon l'une quelconque des revendications 1 à 9, où le support de faible viscosité est choisi dans le groupe ou comprend au moins un membre du groupe consistant en graisse végétale, animale ou synthétique, huile de cuisson ou de friture, graisse, produit d'écoulement goutte à goutte, polyéthylène glycol (PEG), téréphtalate de butylène cyclique (CBT), poly(éthers et esters d'alkyle), cire, esters alkyliques à base de glycérol, sucres, esters alkyliques d'alcools alkyliques ou d'acides alkyliques, esters alkyliques d'acides contenant du phosphore ou du soufre, plastifiants, retardateurs de flamme, stabilisants, et composants provenant de systèmes réactifs, ou leurs combinaisons.

11. Procédé selon la revendication 10, où le support de faible viscosité est choisi parmi ou comprend au moins un membre du groupe consistant en ou dérivé d'huiles naturelles ou huiles naturelles hydrogénées, ou leurs combinaisons.

12. Procédé selon l'une quelconque des revendications 1 à 11, où le polymère thermoplastique est choisi parmi les polyamides (PA), polycarbonate (PC), homopolymères et copolymères de polyoxyméthylène (POM), polyuréthanes thermoplastiques (TPU), polyoléfines, polypropylène (PP), polyéthylène (PE), polyéthylène de masse moléculaire ultra élevée (UHMWPE), poly(téréphtalate d'éthylène) (PET), poly(téréphtalate de butylène) (PBT), polyacrylate, poly(méthacrylate de méthyle) (PMMA), polymères de styrène (PS), polystyrène à impact élevé (HiPS), polyacrylonitrile (PAN), poly(styrène/acrylnitrile) (SAN), acrylate d'acylnitrile styrène (ASA), poly(acrylonitrile/butadiène/styrène) (ABS), poly(chlorure de vinyle) (PVC), poly(éther imide) (PEI), poly(étheréthercétone) (PEEK), poly(sulfure de phénylène) (PPS), polysulfone (PSU), poly(oxyde de phénylène) (PPO), poly(éther de phénylène) (PPE), polymères fluorés, ou mélanges, copolymères ou leurs modifications.

13. Procédé selon la revendication 12, où le polymère thermoplastique est choisi parmi polyamide 6 (PA6), polyamide 6.6 (PA6.6), polyamide 12 (PA12), PP, PE, UHMWPE, PS, poly(fluorure de vinylidène) (PVDF), et PAN.

14. Procédé selon l'une quelconque des revendications 1 à 13, où la charge et le support de faible viscosité sont prémélangés avant d'être ajoutés au système d'extrusion (1).

15. Procédé selon l'une quelconque des revendications 1 à 14, où une extrudeuse (2) ayant un orifice (6) est utilisée, tandis que l'orifice (6) forme la au moins une autre sortie (8), et tandis que l'extrudeuse (2) est orientée de telle manière que l'orifice (6) pointe dans une direction latérale ou descendante.

16. Procédé selon l'une quelconque des revendications 1 à 15, où la durée de séjour des composants avant qu'ils atteignent l'autre sortie (8) est dans l'intervalle de 15 s à 15 min.

17. Procédé selon la revendication 16, où la durée de séjour des composants avant qu'ils atteignent l'autre sortie (8) est dans l'intervalle de 30 s à 10 min ou dans l'intervalle de 60 s à 5 min.

18. Utilisation d'une extrudeuse (2) avec une sortie de produit (4) pour la combinaison d'une matière composite comprenant une charge et un polymère thermoplastique ou une résine réactive en présence d'un support de faible viscosité, **caractérisée en ce que** le support de faible viscosité est collecté par l'intermédiaire d'au moins une autre sortie (8) de l'extrudeuse (2) et sort de l'extrudeuse (2) sous forme d'un liquide; et **en ce qu'**on utilise une extrudeuse (2) ayant un orifice (6), où l'orifice (6) forme la au moins une autre sortie (8), tandis que l'extrudeuse (2) est orientée de telle manière que l'orifice (6) pointe dans une direction latérale ou descendante et tandis que la température de traitement dans l'extrudeuse (2) est fixée de telle manière que le support de faible viscosité et le polymère soient dans un état liquide et que la tension de vapeur du support de faible viscosité soit encore d'au moins 20°C en dessous de son point d'ébullition.

19. Procédé selon la revendication 15 ou utilisation selon la revendication 18, où l'orifice (6) pointe dans une direction latérale ou descendante avec un angle entre 0° et 90° ou avec un angle entre 10° et 90° par rapport au plan vertical.
